# EUROPÄISCHE PATENTANMELDUNG

(11) **EP 3 385 099 A2**
(43) Veröffentlichungstag der Anmeldung: **10.10.2018**
(21) Anmeldenummer: 18163063.3
(22) Anmeldetag: 21.03.2018
(51) Int. Cl.: B60H 1/00, B60H 1/03, B60H 1/22

(54) **BREMSWIDERSTAND ZUR REALISIERUNG EINES ZUHEIZERS**

(30) Priorität: 08.04.2017 DE 102017003441
(71) Anmelder: MAN Truck & Bus AG, 80995 München (DE)
(72) Erfinder: Hubert, Markus, 81247 München (DE); Peteranderl, Johannes, 81377 München (DE); Obermeier, Jörg, 91126 Schwabach (DE); Bug, Andreas, 36037 Fulda (DE)
(74) Vertreter: v. Bezold & Partner Patentanwälte - PartG mbB

(57) **Zusammenfassung**

Die Erfindung betrifft eine Betriebsverfahren, vorzugsweise Steuerungs- oder Regelungsverfahren, für ein Hybrid-Fahrzeug (H), mit einem Verbrennungsmotor zum Verbrennen von Kraftstoff, einer elektrischen Antriebsmaschine und einem Kühlmittel-führenden, den Verbrennungsmotor umfassenden Kühlmittelkreislauf. Das Betriebsverfahren zeichnet sich insbesondere dadurch aus, dass im Kühlmittelkreislauf ein Bremswiderstand verbaut ist und der Bremswiderstand zur Erwärmung des Kühlmittels Abwärme erzeugt (E1), wobei die Abwärme des Bremswiderstands über das Kühlmittel zum Erwärmen eines Innenraums des Hybrid-Fahrzeugs (E1.1) und/oder zum Erwärmen des Verbrennungsmotors (E1.2) genutzt wird und vorzugsweise der Bremswiderstand somit als Zuheizer für den Innenraum und/oder den Verbrennungsmotor wirkt.

## Beschreibung

Die Erfindung betrifft ein Betriebsverfahren, vorzugsweise ein Steuerungs- oder Regelungsverfahren, für ein insbesondere elektrisches Hybrid-Fahrzeug. Das Hybrid-Fahrzeug umfasst zweckmäßig einen Verbrennungsmotor zum Antreiben des Hybrid-Fahrzeugs, eine elektrische Antriebsmaschine zum Antreiben des Hybrid-Fahrzeugs und einen Kühlmittel-führenden, den Verbrennungsmotor umfassenden Kühlmittelkreislauf.

Hybrid-Fahrzeuge erzielen gegenüber herkömmlichen, rein verbrennungsmotorisch angetriebenen Fahrzeugen eine erhebliche Kraftstoffersparnis. Durch die erzielte Kraftstoffersparnis und folglich die verbesserte Effizienz ergibt sich eine verringerte Abwärme des Verbrennungsmotors, die üblicherweise zum Erwärmen eines Fahrzeuginnenraums erforderlich ist. Die verringerte Abwärme führt bei niedrigen Außentemperaturen (zum Beispiel Winter) dazu, dass der Verbrennungsmotor nicht oder nur verspätet seine bevorzugte Betriebstemperatur erreicht, wodurch z. B. die zur Emissionsminderung notwendigen Funktionen nicht bedarfsgerecht freigeschaltet werden können. Die verringerte Abwärme führt auch dazu, dass Abgasnachbehandlungskomponenten (zum Beispiel Katalysatoren) nicht oder verspätet ihre bevorzugte Betriebstemperatur erreichen, insbesondere deshalb, weil die Temperatur des Abgases des Verbrennungsmotors ebenfalls verringert bleibt.

Aus dem Stand der Technik sind zur Lösung der vorstehend genannten Problemstellung sogenannte Zuheizer ("Zusatzheizungen") bekannt, die elektrisch- oder Kraftstoff-basiert arbeiten und bei Bedarf den Innenraum des Fahrzeugs und den Verbrennungsmotor erwärmen. Derartige Zuheizer stellen allerdings zusätzliche, oftmals relativ teure Bauteile dar.

Eine Aufgabe der Erfindung ist es, eine alternative und/oder verbesserte Möglichkeit zum Aufheizen eines Verbrennungsmotors und/oder zum Aufheizen eines Innenraums eines Hybrid-Fahrzeugs zu schaffen.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung betrifft ein Betriebsverfahren, zum Beispiel ein Steuerungs- oder Regelungsverfahren, für ein insbesondere elektrisches Hybrid-Fahrzeug, vorzugsweise ein Hybrid-Nutzfahrzeug, zum Beispiel ein Hybrid-Omnibus oder ein Hybrid-Lastkraftwagen. Das Hybrid-Fahrzeug umfasst zunächst einen Verbrennungsmotor zum Verbrennen von Kraftstoff (z. B. Dieselmotor zum Verbrennen von Dieselkraftstoff), eine elektrische Antriebsmaschine (z. B. Elektromotor) und einen Kühlmittel-führenden, den Verbrennungsmotor umfassenden Kühlmittelkreislauf.

Der Verbrennungsmotor und die elektrische Antriebsmaschine dienen zweckmäßig zum Antrieben des Hybrid-Fahrzeugs.

Der Kühlmittelkreislauf dient insbesondere zum Kühlen des Verbrennungsmotors.

Das Betriebsverfahren zeichnet sich insbesondere dadurch aus, dass im Kühlmittelkreislauf ein Bremswiderstand verbaut ist und der Bremswiderstand zur Erwärmung des Kühlmittels Abwärme erzeugt, wobei die Abwärme des Bremswiderstands über das Kühlmittel zum Erwärmen (zweckmäßig Aufheizen) eines Innenraums (z. B. Fahrerraum und/oder Fahrgastraum) des Hybrid-Fahrzeugs und/oder zum Erwärmen (zweckmäßig Aufheizen) des Verbrennungsmotors genutzt wird. Der Bremswiderstand wirkt somit vorzugsweise als Zuheizer für den Innenraum und/oder den Verbrennungsmotor des Hybrid-Fahrzeugs

Auf den Einbau eines aus dem Stand der Technik üblichen zusätzlichen Zuheizers kann folglich zweckmäßig verzichtet werden. Ebenso ist z. B. ein Entfall einer Standheizung als Serienausstattung für das Hybrid-Fahrzeug möglich. Auch ist zweckmäßig ein Entfall eines zusätzlichen Dieseltanks bei Verwendung von Biokraftstoff wie etwa B100 oder Sonderkraftstoffen möglich.

Es ist möglich, dass der Verbrennungsmotor Motorleistung (Energie) erzeugt und zumindest einen Teil der Motorleistung mittels des Bremswiderstands in Abwärme umsetzt. Im Rahmen der Erfindung ist es somit möglich, dass der Verbrennungsmotor gezielt Motorleistung für den Bremswiderstand erzeugt, so dass der Bremswiderstand die Motorleistung möglichst effizient in Abwärme und somit Heizleistung umwandeln kann.

Eine gezielte Erhöhung der Motorlast und ein gezielter Einsatz des Bremswiderstands für ein beschleunigtes Aufheizen des Kühlmittels ist somit möglich.

Ebenfalls ist es möglich, dass eine Motorlast des Verbrennungsmotors erhöht wird, so dass eine Temperatur eines Abgases des Verbrennungsmotors erhöht und somit eine Abgasnachbehandlungskomponente (zum Beispiel ein Katalysator) des Hybrid-Fahrzeugs erwärmt und/oder deren Temperatur im Wesentlichen gehalten wird. Dadurch kann z. B. eine bevorzugte Betriebstemperatur der Abgasnachbehandlungskomponente schneller erreicht werden oder gehalten werden.

Der Verbrennungsmotor kann zum Beispiel über einen Generator mit dem Bremswiderstand wirkverbunden sein, so dass zumindest ein Teil der Motorleistung des Verbrennungsmotors über den Generator dem Bremswiderstand zugeführt wird.

Der Bremswiderstand kann insbesondere für oder während Kaltstartphasen des Hybrid-Fahrzeugs aktiviert werden, um insbesondere in den Kaltstartphasen Abwärme und somit Heizleistung zu erzeugen.

Allerdings ist es auch möglich, dass der Bremswiderstand zum Halten der Temperatur des Kühlmittels, der Temperatur des Innenraums und/oder der Temperatur des Verbrennungsmotors aktiviert wird, was zum Beispiel auch nach einer Kaltstartphase erforderlich sein kann, zum Beispiel an relativ kalten Wintertagen.

Der Betrieb, zum Beispiel ein Aktivieren und/oder Deaktivieren des Bremswiderstands, kann in Abhängigkeit von zumindest einem von Folgendem erfolgen: einer Außentemperatur des Hybrid-Fahrzeugs, einer Temperatur des Kühlmittels, eines Ladezustands eines elektrischen Speichers des Hybrid-Fahrzeugs, eines Leistungsbedarfs des Hybrid-Fahrzeugs (z. B. des Verbrennungsmotors und/oder der elektrischen Antriebsmaschine), einer Leistungsabgabe des Verbrennungsmotors, einer Leistungsabgabe der elektrischen Antriebsmaschine und/oder einer Fahrgeschwindigkeit des Verbrennungsmotors.

Der Bremswiderstand kann z. B für eine Bergauffahrt oder während einer Bergauffahrt deaktiviert werden.

Bei einer bevorzugten Ausführungsform der Erfindung kann das Erwärmen des Innenraums des Hybrid-Fahrzeugs und/oder das Erwärmen des Verbrennungsmotors ohne zusätzlichen Zuheizer und/oder ohne Standheizung erfolgen und folglich vorzugsweise ausschließlich mittels des Bremswiderstands. Daraus folgt, dass das Hybrid-Fahrzeug in einer bevorzugten Ausführungsform keine Standheizung und/oder keinen zusätzlichen Zuheizer zum Erwärmen des Innenraums und/oder zum Erwärmen des Verbrennungsmotors aufweist.

Zu erwähnen ist noch, dass das Betriebsverfahren vorzugsweise im Wesentlichen auf in Hybrid-Fahrzeugen oftmals bereits verbaute Basiskomponenten zurückgreifen kann, so dass zur Realisierung des Betriebsverfahrens keine bis wenige Modifikationen an bereits vorhandener oder bereits verbauter Hybrid-Fahrzeug-Architektur erforderlich ist. In einigen Fällen kann hierfür sogar ein Software-Update eines Steuergeräts (z. B. eines Steuergeräteverbunds) des Hybrid-Fahrzeugs ausreichend sein.

Das Hybrid-Fahrzeug ist vorzugsweise ein Hybrid-Kraftfahrzeug, insbesondere ein elektrisches Hybrid-Kraftfahrzeug.

Im Rahmen der Erfindung umfasst das Merkmal "Halten der Temperatur" vorzugsweise ein Halten der Temperatur in einem vorbestimmen Temperaturbereich, z. B. einer Temperatur über oder unter einer bestimmten Grenztemperatur oder eine Zieltemperatur mit einer zweckmäßig vordefinierten Abweichung von z. B. max. +/- 5°, 3° oder 1°.

Die oben beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit der beigefügten Figur.

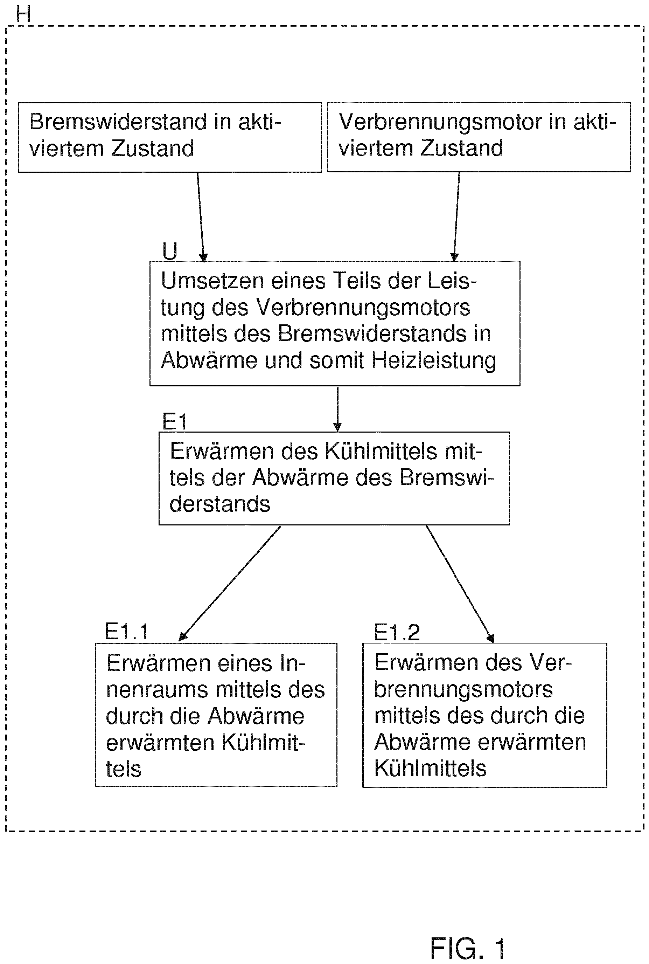

Figur 1 zeigt eine schematische Darstellung zur Erläuterung des Betriebsverfahrens gemäß einer Ausführungsform der Erfindung.

Die gestrichelte Linie symbolisiert stark schematisch ein elektrisches Hybrid-Fahrzeug H, wobei das Hybrid-Fahrzeug H einen Verbrennungsmotor zum Verbrennen von Kraftstoff, eine elektrische Antriebsmaschine und einen Kühlmittel-führenden, den Verbrennungsmotor umfassenden Kühlmittelkreislauf aufweist. Der Verbrennungsmotor und die elektrische Antriebsmaschine dienen wie üblich zum Antreiben des Hybrid-Fahrzeugs H, wobei der Kühlmittelkreislauf zunächst wie üblich zum Kühlen des Verbrennungsmotors dient. Der Verbrennungsmotor ist vorzugsweise ein Dieselmotor, so dass der Kraftstoff vorzugsweise Diesel ist.

Im Kühlmittelkreislauf ist ein Bremswiderstand verbaut. Der Bremswiderstand erzeugt in Schritt E1 zur Erwärmung des Kühlmittels Abwärme.

Die Abwärme des Bremswiderstands wird über das Kühlmittel in Schritt E 1.1 zum Erwärmen eines Innenraums des Hybrid-Fahrzeugs H genutzt. Zusätzlich kann die Abwärme des Bremswiderstands über das Kühlmittel in Schritt E1.2 zum Erwärmen des Verbrennungsmotors genutzt werden, um das Erreichen der Betriebstemperatur des Verbrennungsmotors zu beschleunigen. Der Bremswiderstand wirkt somit als Zuheizer für den Innenraum und/oder den Verbrennungsmotor.

Der Bremswiderstand wird zweckmäßig durch den Verbrennungsmotor betrieben, was in Figur 1 in Schritt U dargestellt ist. Der Verbrennungsmotor erzeugt hierzu Motorleistung, wobei zumindest ein Teil der Motorleistung mittels des Bremswiderstands in Abwärme umgesetzt wird. Der Verbrennungsmotor erzeugt somit Motorleistung für den Bremswiderstand, so dass Kraftstoff in Abwärme und somit in Heizleistung des Bremswiderstands umgewandelt wird. Mit anderen Worten speist der Verbrennungsmotor folglich den Bremswiderstand zur Erzeugung von Abwärme mit Leistung/Energie.

Es ist dabei sogar möglich, dass eine Motorlast des Verbrennungsmotors gezielt erhöht wird, so dass bei aktiviertem Bremswiderstand dadurch die Abwärme des Bremswiderstands und somit dessen Heizleistung gesteigert wird.

Eine gezielte Erhöhung der Motorlast des Verbrennungsmotors kann auch durchgeführt werden, um eine Temperatur eines Abgases des Verbrennungsmotors zu erhöhen und somit eine Erwärmung einer Abgasnachbehandlungskomponente wie insbesondere eines Katalysators des Hybrid-Fahrzeugs H zu beschleunigen.

Besonders vorteilhaft an dem Betriebsverfahren ist also, dass durch eine Lastanhebung der Verbrennungskraftmaschine auch die Temperatur des Abgases erhöht wird, wodurch ein schnelleres Aufheizen der Abgasnachbehandlungskomponente bewirkt wird.

Der Bremswiderstand kann insbesondere für Kaltstartphasen oder während Kaltstartphasen des Hybrid-Fahrzeugs H aktiviert werden, so dass der Bremswiderstand insbesondere in Kaltstartphasen Abwärme und somit Heizleistung für den Innenraum und/oder den Verbrennungsmotor erzeugt. Allerdings kann der Bremswiderstand auch zum im Wesentlichen Halten der Temperatur des Kühlmittels, der Temperatur des Innenraums und/oder der Temperatur des Verbrennungsmotors aktiviert werden, was zum Beispiel auch nach Kaltstartphasen der Fall sein kann. Um das Hybrid-Fahrzeug H effektiv zu betreiben, wird der Bremswiderstand vorzugsweise für eine Bergauf-Fahrt oder während einer Bergauf-Fahrt deaktiviert.

Der Betrieb und somit das Aktivieren und/oder Deaktivieren des Bremswiderstands erfolgt vorzugsweise in Abhängigkeit einer Außentemperatur des Hybrid-Fahrzeugs H, einer Temperatur des Kühlmittels, einem Ladezustand eines elektrischen Speichers des Hybrid-Fahrzeugs H, einem Leistungsbedarf des Hybrid-Fahrzeugs H, einer Leistungsabgabe des Verbrennungsmotors, einer Leistungsabgabe der elektrischen Antriebsmaschine und/oder einer Fahrgeschwindigkeit des Hybrid-Fahrzeugs H. Notwendige Signale und Sensoren sind hierzu oftmals bereits in einigen Hybrid-Fahrzeugen vorhanden, so dass zumindest teilweise auf bereits bestehende Fahrzeugarchitektur zurückgegriffen werden kann.

Bei einer besonders bevorzugten Ausführungsform steht der Verbrennungsmotor über einen Generator mit dem Bremswiderstand in Wirkverbindung, so dass zumindest ein Teil der Leistung des Verbrennungsmotors über den Generator an den Bremswiderstand geführt wird.

Mittels des hierin offenbarten Betriebsverfahrens ist insbesondere Folgendes vorteilhaft darstellbar:
- Steuerung und/oder Regelung des Gesamtwärmehaushalts eines elektrischen Hybrid-Fahrzeugs unter Verwendung eines im Kühlmittelkreislauf der Verbrennungskraftmaschine verbauten Bremswiderstandes
- gezielte Erhöhung der Motorlast und Einsatz des Bremswiderstands für ein beschleunigtes Aufheizen des Kühlmittels
- gezielte Erhöhung der Motorlast und Einsatz des Bremswiderstands zum Halten der Temperatur des Kühlmittels
- gezielte Erhöhung der Motorlast zum Steigern der Abgastemperatur zum Aufheizen einer Abgasnachbehandlungskomponente des Hybrid-Fahrzeugs und damit verbundene schnellere Betriebsbereitschaft der selbigen, insbesondere in Kaltstartphasen (zum Beispiel bei kaltem Verbrennungsmotor)
- gezielte Erhöhung der Motorlast zum Halten der Temperatur der Abgasnachbehandlungskomponente
- Berücksichtigung der Außentemperatur des Hybrid-Fahrzeugs zur Prüfung, ob zusätzliche Heizleistung durch den Bremswiderstand erforderlich ist oder nicht
- Reduzierung der Heizleistung bei Bedarf an Generatorleistung durch das Antriebssystem.

Die Erfindung ist nicht auf die vorstehend beschriebenen, bevorzugten Ausführungsbeispiele beschränkt. Vielmehr ist eine Vielzahl von Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den jeweils in Bezug genommenen Ansprüchen und insbesondere auch ohne die Merkmale des Hauptanspruchs. Die Erfindung umfasst also verschiedene Erfindungsaspekte, die unabhängig voneinander Schutz genießen.

## Patentansprüche

1. Betriebsverfahren, vorzugsweise Steuerungs- oder Regelungsverfahren, für ein Hybrid-Fahrzeug (H), mit einem Verbrennungsmotor zum Verbrennen von Kraftstoff, einer elektrischen Antriebsmaschine und einem Kühlmittel-führenden, den Verbrennungsmotor umfassenden Kühlmittelkreislauf, **dadurch gekennzeichnet, dass** im Kühlmittelkreislauf ein Bremswiderstand verbaut ist und der Bremswiderstand zur Erwärmung des Kühlmittels Abwärme erzeugt (E1), wobei die Abwärme des Bremswiderstands über das Kühlmittel zum Erwärmen eines Innenraums des Hybrid-Fahrzeugs (E1.1) und/oder zum Erwärmen des Verbrennungsmotors (E1.2) genutzt wird und vorzugsweise der Bremswiderstand somit als Zuheizer für den Innenraum und/oder den Verbrennungsmotor wirkt.

2. Betriebsverfahren nach Anspruch 1, **dadurch gekennzeichnet, dass** der Verbrennungsmotor Motorleistung erzeugt (U) und zumindest einen Teil der Motorleistung mittels des Bremswiderstands in Abwärme umsetzt.

3. Betriebsverfahren nach Anspruch 1 oder 2, **dadurch gekennzeichnet, dass** der Verbrennungsmotor Motorleistung für den Bremswiderstand erzeugt (U), so dass der Kraftstoff in Abwärme und somit in Heizleistung des Bremswiderstands umgewandelt wird.

4. Betriebsverfahren nach einem der vorhergehenden Ansprüche, **dadurch gekennzeichnet, dass** eine Motorlast des Verbrennungsmotors erhöht wird, so dass eine Temperatur eines Abgases des Verbrennungsmotors erhöht und somit eine Abgasnachbehandlungskomponente des Hybrid-Fahrzeugs (H) erwärmt und/oder deren Temperatur gehalten wird.

5. Betriebsverfahren nach einem der vorhergehenden Ansprüche, **dadurch gekennzeichnet, dass** der Verbrennungsmotor über einen Generator mit dem Bremswiderstand wirkverbunden ist, so dass zumindest ein Teil der Motorleistung des Verbrennungsmotors über den Generator dem Bremswiderstand zugeführt wird.

6. Betriebsverfahren nach einem der vorhergehenden Ansprüche, **dadurch gekennzeichnet, dass** der Bremswiderstand für oder in Kaltstartphasen des Hybrid-Fahrzeugs (H) aktiviert wird, so dass er vorzugsweise in Kaltstartphasen Abwärme und somit Heizleistung erzeugt.

7. Betriebsverfahren nach einem der vorhergehenden Ansprüche, **dadurch gekennzeichnet, dass** der Bremswiderstand zum Halten der Temperatur des Kühlmittels, der Temperatur des Innenraums und/oder der Temperatur des Verbrennungsmotors aktiviert wird.

8. Betriebsverfahren nach einem der vorhergehenden Ansprüche, **dadurch gekennzeichnet, dass** der Betrieb, vorzugsweise ein Aktivieren und/oder Deaktivieren, des Bremswiderstands in Abhängigkeit von zumindest einem von folgenden erfolgt:
- einer Außentemperatur des Hybrid-Fahrzeugs (H),
- einer Temperatur des Kühlmittels,
- einem Ladezustand eines elektrischen Speichers des Hybrid-Fahrzeugs (H),
- einem Leistungsbedarf des Hybrid-Fahrzeugs (H),
- einer Leistungsabgabe des Verbrennungsmotors,
- einer Leistungsabgabe der elektrischen Antriebsmaschine,
- einer Fahrgeschwindigkeit des Verbrennungsmotors.

9. Betriebsverfahren nach einem der vorhergehenden Ansprüche, **dadurch gekennzeichnet, dass** der Bremswiderstand für eine Bergauffahrt oder während einer Bergauffahrt deaktiviert wird.

10. Betriebsverfahren nach einem der vorhergehenden Ansprüche, **dadurch gekennzeichnet, dass** das Erwärmen des Innenraums des Hybrid-Fahrzeugs (H) und/oder das Erwärmen des Verbrennungsmotors ohne zusätzlichen Zuheizer und/oder ohne Standheizung und somit erfolgt.
